(19) Europäisches Patentamt
European Patent Office
Office européen des brevets

(11) **EP 4 110 489 B1**

(12) **EUROPEAN PATENT SPECIFICATION**

(45) Date of publication and mention
of the grant of the patent:
**01.01.2025 Bulletin 2025/01**

(21) Application number: **21703714.2**

(22) Date of filing: **08.02.2021**

(51) International Patent Classification (IPC):
**B01D 9/00** *(2006.01)* **B01D 11/02** *(2006.01)*
**A24D 3/00** *(2020.01)*

(52) Cooperative Patent Classification (CPC):
**B01D 9/0054; B01D 11/0288;** B01D 11/0257;
B01D 11/0265

(86) International application number:
**PCT/EP2021/052904**

(87) International publication number:
**WO 2021/170381 (02.09.2021 Gazette 2021/35)**

(54) **METHOD FOR TREATING CIGARETTE BUTTS**

VERFAHREN ZUM BEHANDELN VON ZIGARETTENSTUMMELN

PROCÉDÉ DE TRAITEMENT DE MÉGOTS DE CIGARETTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2020 IT 202000003745**

(43) Date of publication of application:
**04.01.2023 Bulletin 2023/01**

(73) Proprietors:
• **Consiglio Nazionale delle Ricerche**
**00185 Roma (IT)**
• **Azzeroco2 S.r.l.**
**00184 Roma (IT)**

(72) Inventors:
• **PETRACCHINI, Francesco**
**00185 ROMA (IT)**
• **PAOLINI, Valerio**
**00185 ROMA (IT)**
• **DRIGO, Serena**
**00184 ROMA (IT)**
• **BIENTINESI, Ilaria**
**00184 ROMA (IT)**
• **FACCI, Enrico Giovanni**
**00184 ROMA (IT)**

(74) Representative: **Comoglio, Elena**
**Jacobacci & Partners S.p.A.**
**Corso Emilia 8**
**10152 Torino (IT)**

(56) References cited:
**WO-A2-2007/035749** **CN-A- 106 928 486**
**US-A1- 2014 326 421**

• **MARÍA J. BENAVENTE ET AL: "Cellulose Acetate
Recovery from Cigarette Butts", PROCEEDINGS,
vol. 2, no. 20, 25 February 2019 (2019-02-25),
pages 1447, XP055746983, DOI:
10.3390/proceedings2201447**

**Description**

**Background of the invention**

The present disclosure relates to the chemistry field and in particular to a process (as defined in the appended claims) intended to degrade cigarette butts and recycle the components thereof as well as the related apparatus for performing it. In particular it relates to the recycling of the cellulose acetate (CA) present in the cigarette butts. The recycled CA may then be used as a material for making new products, such as garments, curtains, upholstery, breathable lining, films, buttons, glasses frames, cigarette filters, ink cartridges for ballpoint pens, diapers and pads, toys, ribbons, playing cards, semi-permeable membranes for purifying air, face shields, artificial fibres, gift items, ashtrays and small containers.

**Background**

US Patent no. US4457317 discloses a method for degrading cigarette butts which provides using heat to separate paper from cellulose acetate (CA), as the adhesive bonding them melts at a suitable temperature. The heat carrier may be a heated gas, the temperature range may be between 80 and 200 °C, and the whole procedure may be implemented inside a fluidized bed.

It is further known separating cellulose acetate (CA) and paper by elutriation, after grinding cigarette filters, the components are separated based on their different settling speeds using a fluid stream (gas or liquid) which flows in a direction usually opposite to the settling direction (Maré E, Beven B, Cristafio C (2015) Developments in nonmagnetic physical separation technologies for hematitic/goethitic iron ore. Book chapter in Iron Ore: Mineralogy, Processing and Environmental Sustainability. Editor: Liming Lu. Publisher: Elsevier. ISBN 978-1-78242-156-6).

US Patent no. US5328934, discloses a method which provides to purify cellulose acetate (CA), separated from paper, by washing it in a supercritical fluid having a density similar to a liquid and a viscosity similar to a gas and having a high extraction ability and a low environmental impact, in the presence of carbon dioxide, at a temperature within the range 20-80 °C and 95-680 atmospheres.

US Patent no. US5504119 discloses a method which provides, downstream of elutriation, to remove pollutants with water or vapour in the pH ranging from 4.0 to 8.0 at a temperature within the range 10-100 °C and soaking time lower than 60 minutes.

US Patent no. US5504120 discloses using antioxidant agents, such as for instance peroxides, inside the water used for the washes to obtain an increase in removing pollutants.

European Patent Application no. EP2520184 discloses a method wherein the non-ground cigarette filter is recycled by a wash in an oxidizing environment, in the presence of 5% sodium hypochlorite in water, hydrogen peroxide and fragrances.

International Patent Application, publication no. WO2007035749A2 discloses a method which comprises the steps of grinding filters, adding a solvent capable of solubilizing the polymer, adding an anti-solvent to precipitate the polymer, subsequently filtrating and positioning the semi-solid mass in a mould to obtain a finished product, wherein the solvent used is acetone and the anti-solvent is light petroleum, wherein the product obtained may be used as an adhesive and the liquid obtained before adding the anti-solvent may be filtered, pressed or centrifuged, and the rejected fraction may be used as a fuel.

US Patent Application, publication no. US20140287144 discloses a method which is very similar to that disclosed in WO2007035749A2 wherein bonding agents, colouring agents and ultraviolet-radiation protection filters are added.

A treatment was disclosed wherein cigarette butts are treated with sodium hydroxide, generating a "black liquor" similar to that commonly produced in the papermill factory containing lignin, carbonyls, metals, nicotine and nitrosamines. The black liquor was submitted to acidification to facilitate the precipitation of lignin, coagulation with chitosan and aluminium sulfate to remove metals and organic compounds and ozonisation to oxidise resistant chemical substances enabling to reduce the chemical oxygen demand (COD) of the black liquor, which initially was 29.986 mg L-1: the percentage of reduction was of 20% by acidification, 66% by coagulation with chitosan and 45.8% with ozonisation. The effluent is clarified by the alkali treatment as the COD of the liquid obtained is high (d'Heni Teixeira MB, Duarte MAB, Raposo Garcez L, Camargo Rubim J, Hofmann Gatti T, Ziani Suarez PA (2017) Process development for cigarette butts recycling into cellulose pulp. Waste Management 60: 140-150).

An additional method allows to separate cellulose acetate (AC) from other components, said method provides to wash the filters with solutions of 5% sodium chloride in water, 5% sodium acetate in water, 0.02% sulfuric acid in water, ethanol, ethyl ether and solubilize them in acetone, and finally CA is precipitated again adding water (Benavente MJ, Arévalo Caballero MJ, Silvero G, López-Coca I, Valentin Gómez Escobar V (2018) Cellulose Acetate Recovery from Cigarette Butts. MDPI Proceedings 2: 1447).

Scientific publication to Maria J. Benavente ET AL: "Cellulose Acetate Recovery from Cigarette Butts", Proceedings, vol. 2, no. 20, 25 February 2019 (2019-02-25), page 1447, XP055746983, D01: 10.3390/proceeding52201447, International Patent Application no. WO 2007/035749, Chinese Patent no. CN 106 928 486 and US Patent Application, publication no. US 2014/326421 disclose the degradation of cigarette butts by immersion in acetone and precipitation using water.

**Technical problem**

Several methods are known in the prior art for separating the components of cigarette filters, and the scientific community has focused on the recovery of cellulose acetate (CA) and paper.

The techniques known in the art may be classified in two main types. The first type provides washing solid cellulose acetate (CA) with water or other solvents which solubilize only impurities. The disadvantage of this type is related to the hight costs of the initial passages of grinding and separating cellulose acetate (CA) from paper and from ash and tobacco residues. The second type provides solubilizing cellulose acetate (CA) with a solvent, leaving paper and ash and tobacco residues, which cannot be solubilized, as easily removable solids. Thereafter the cellulose acetate (CA) is recovered by precipitation with an anti-solvent.

All the methods falling into the second type provide using an anti-solvent which is less polar than the solvent. For example, in the International Patent Application Publication no. WO2007035749A2 it is provided using light petroleum as an anti-solvent. However this approach has a disadvantage in that it makes the recovery of the solvent, which cannot be distilled from the mixture consisting in solvent and anti-solvent, very complex and expensive. In this case, many impurities, such as tar, coprecipitate with cellulose acetate (CA) and for this reason the cigarette butts have to be previously cleaned through a number of pre-treatments.

Pre-treatments require using acids, oxidants and other reactants which alter the properties of the cellulose acetate (CA). In particular, the percentage of acetylation is modified following hydrolysis of the ester bond. Consequently, the possible applications of the material obtained are partially compromised as the chemical-physical properties thereof are changed.

A method has been disclosed which uses an anti-solvent that is more polar than the solvent and allows to recover the solvent by distillation. However, in this case also the cigarette filters need to be cleaned from tar before being dissolved and precipitated with solvent and anti-solvent (Maria J. Benavente, Maria J. Arévalo Caballero, Guadalupe Silvero, Ignacio López-Coca and Valentin Gómez Escobar, Cellulose Acetate Recovery from Cigarette Butts, Proceedings 2018, 2, 1447; doi:10.3390/proceedings2201447).

In view of what known in the art, the inventors of the present invention have developed a method falling within the above described second type and having the following advantages: it does not require the removal of tobacco and ash residues before being solubilized; it does not require any pre-treatments to clean filters from tar; it allows obtaining cellulose acetate (CA) without altering the percentage of acetylation; it allows precipitating cellulose acetate (CA) without tar; it allows recovering the solvent in a rapid and cheap way, it does not require using solvents that are harmful for the operator or toxic for the environment.

**Object of the invention**

The present invention relates to a process for the degradation of cigarette butts, wherein the cigarette butts are composed by paper, ash residues and tobacco residues, cellulose acetate (CA), nicotine and tar, to recover pure cellulose acetate CA comprising the following steps:

 a) soaking cigarette butts in a solution of at least one polar aprotic solvent for a time sufficient to obtain the complete dissolution of cellulose acetate (CA) and nicotine, to obtain a precipitate of paper, ash residues and tobacco residues and a solution of cellulose acetate (CA) nicotine and tar; wherein the polar aprotic solvent is acetone;
 b) removal of the precipitate consisting of paper, ash residues and tobacco residues as obtained in step a) by filtration;
 c) drying the precipitate as removed in step b) to remove the residual solvent;
 d) adding a polar protic anti-solvent to the solution of cellulose acetate (CA) nicotine and tar as obtained in step a) to obtain a precipitate of pure cellulose acetate (CA) as final product together with a liquid residue made of polar aprotic solvent, polar protic anti-solvent, nicotine and tar;
 e) filtration of the precipitate of pure cellulose acetate (CA) as obtained in step d) to separate from the liquid residue of polar aprotic solvent, polar protic anti-solvent, nicotine and tar;
 f) distillation of the liquid residue of polar aprotic solvent, polar protic anti-solvent, nicotine and tar as obtained in step e) to obtain a of polar aprotic solvent reusable in a further cycle, as further final product, and a waste residue made of nicotine and tar concentrate in polar protic anti-solvent.

Further features will be clear from the following detailed description with reference to the enclosed figures and reported experimental examples.

## Brief description of the figures

Figure 1 shows in a diagram the thermogravimetric analysis in $N_2$ of a cigarette butt before and after the dissolution/precipitation treatment.

Figure 2 shows the plant diagram.

## Detailed description of the invention

### Definitions

Within the meaning of the present invention aprotic solvent means a solvent whose molecular structure does not have a hydrogen atom dissociable as H+ ion.

Within the meaning of the present invention polar aprotic solvent means a compound having a high dielectric constant and a high polarity, therefore capable of solubilizing polar and ionic compounds, while not having dissociable hydrogen ions, in particular with a dielectric constant higher than 10 (dielectric constant being defined as the ratio between the absolute electrical permittivity of the material and the absolute electrical permittivity of vacuum).

Within the meaning of the present invention anti-solvent means a liquid which, when added to the cellulose acetate (CA) solution in the solvent, determines the precipitation of the polymer. Examples of anti-solvents for cellulose acetate (CA) are water, alcohols, carboxylic acids, ammonia, amines, ethanol, cyclohexane and light petroleum.

Within the meaning of the present invention polar protic anti-solvent means an anti-solvent having a high dielectric constant and a high polarity and having dissociable hydrogen atoms.

Within the meaning of the present invention the polar protic anti-solvent is selected from the group consisting in water, alcohols such as methanol, ethanol, propanols, carboxylic acids, ammonia, primary and secondary amines.

The object of the invention is a process for the degradation of cigarette butts, wherein the cigarette butts consist of paper, ash residues and tobacco residues, cellulose acetate (CA), nicotine and tar, to recover pure cellulose acetate (CA) comprising the following steps:

a) soaking cigarette butts in a solution of at least one polar aprotic solvent for a time sufficient to obtain the complete dissolution of cellulose acetate (CA) and nicotine, to obtain a precipitate of paper, ash residues and tobacco residues and a solution of cellulose acetate (CA) nicotine and tar; wherein the polar aprotic solvent is acetone.
b) removal of the precipitate consisting of paper, ash residues and tobacco residues as obtained in step a) by filtration;
c) drying the precipitate as removed in step b) to remove the residual solvent;
d) adding a polar protic anti-solvent to the solution of cellulose acetate (CA) nicotine and tar as obtained in step a) to obtain a precipitate of pure cellulose acetate (CA) as final product together with a liquid residue made of polar aprotic solvent, polar protic anti-solvent, nicotine and tar;
e) filtration of the precipitate of pure cellulose acetate (CA) as obtained in step d) to separate from the liquid residue of polar aprotic solvent, polar protic anti-solvent, nicotine and tar;
f) distillation of the liquid residue of polar aprotic solvent, polar protic anti-solvent, nicotine and tar as obtained in step e) to obtain a of polar aprotic solvent reusable in a further cycle, as further final product, and a waste residue made of nicotine and tar concentrate in polar protic anti-solvent.

The polar aprotic solvent has a dielectric constant higher than 10.
The polar aprotic solvent is acetone.
Preferably the anti-solvent is selected from the group consisting of water, ethanol and cyclohexane, and more preferably is water,
**[0031]** Preferably in step f) the solvent undergoes evaporation under vacuum.
A plant for the degradation of cigarette butts is also disclosed for exemplary purpose, wherein the cigarette butts are composed by paper, ash residues, tobacco residues, CA and nicotine comprising: a vessel containing a solution with at least a polar aprotic solvent 1

a filter 2
a jacketed tank having a hot water circulation system 3
at least an evaporation system for the solvent 5,6

a refrigerated vessel 7
an additional filter 4
a collection tank 8
connecting means adapted to connect the components 1 to 8 wherein said connecting means determine recirculation between components 7 and 1.

Preferably the vessel 1 is provided with a pressure measuring device to avoid that, once all the acetone has evaporated, the vacuum pump reduces too much the pressure taking also water to boil.

Preferably the vessel 1 is provided with an automatic stirrer or an ultrasound processor immersed therein to speed up the separation from paper and solubilization of the acetate.

Preferably the at least an evaporation system for the solvent 5,6 is a vacuum pump.

Preferably the tank 3 is placed slightly below the vessel 1 and the filter 2. In alternative, the tank 3 is not placed slightly below the vessel 1 and the filter 2 but it is placed slightly below the tank 8.

Preferably and optionally the plant is provided with at least one spigot necessary to intercept the stream of material, allow for the passage of the fluids when necessary and allow the "formation" of vacuum inside the reactors, more preferably the spigots are a number of three, a first spigot adjusting the stream from the vessel 1 through a filter 2, a second spigot adjusting the stream of the vessel 3 through a filter 4, a third spigot adjusting the stream from the vessel 8 to the water treatment system.

Optionally a water treatment system is associated to the plant.

Optionally an earthing device is present in case pipes and tanks are made of metal.

The vessel 1 contains a solution of at least a polar aprotic solvent in which cigarette butts are placed and wherein the complete dissolution of cellulose acetate (CA) and nicotine takes place to obtain a precipitate consisting of paper, ash residues and tobacco residues and a suspension of cellulose acetate (CA) and nicotine; a spigot is opened when the solubilization of the cellulose acetate (CA) and nicotine is complete to make the content flow through a filter 2, where the suspended solids are retained (paper, ash residues and tobacco residues) which are thus removed, towards a jacketed tank having a hot water circulation system 3 wherein an anti-solvent is added to solubilize the suspension of cellulose acetate (CA) and nicotine; the jacketed tank having a hot water circulation system 3 is placed slightly below the vessel 1 and the filter 2 to facilitate the passage of the compounds to be filtered through the filter 2; the acetone evaporation is a transformation with a highly negative enthalpy ($\Delta H < 0$) and causes a reduction in the solution temperature, this is the reason why the temperature of the tank 3 is maintained making water circulate in the external jacket, as acetone evaporates the water concentration in the solution increases and the cellulose acetate is precipitated; upon opening the spigot, the suspension flows through the filter 4; in the vacuum pump 6 the polar aprotic solvent is separated from water and nicotine taking advantage of the different boiling temperatures; in the refrigerated vessel 7 the vapours of polar aprotic solvent are condensed and the condensed polar aprotic solvent is recycled in the tank 1; the suspension of cellulose acetate (CA) and nicotine is conveyed towards the filter 4 retaining the precipitated CA, while the water with the soluble polluting residues is pumped from the pump 5 in the collecting tank 8 where it can be collected to recover nicotine, or drained in the water treatment system.

## Examples

### Example 1 - Solubility tests

FTIR characterization combined with the thermal analysis has made it possible to confirm that the cigarette filters are mainly made of cellulose acetate, and that no significant differences exist between clean commercial filters and smoked butts. Consequently, it is possible to carry out the laboratory tests for separating the components directly on the cleaned filters, so as to identify the optimal separation procedure. For this purpose, the previously characterized "Rizla Slim" cigarette filters have been selected.

Furthermore, the prior art analysis showed that the solubilization of cellulose acetate (CA) with organic solvents has been so far little explored and requires laboratory tests to identify the optimal conditions.

During the laboratory experiments the optimal conditions were identified for the solubilization and precipitation of the cigarette filters with suitable solvents.

In order to identify the operative parameters for the solubilization and re-precipitation of the cellulose acetate, it was required performing preliminary solubility tests. In fact, the solubility of the cellulose acetate varies according to the degree of acetylation thereof. The solubility of the cellulose acetate in various solvents was tested, obtaining the following results:

Water: insoluble

Ethanol: insoluble

Acetone: soluble

Cyclohexane: insoluble

Consequently, filters are soluble in polar aprotic solvents as acetone, while they are not soluble in polar protic solvents as water and alcohols. However, when solvents that are too apolar are used, the cellulose acetate is not soluble.

The results obtained confirm the composition of the sample and the relative degree of acetylation.

The dissolution and precipitation tests were carried out dissolving the cigarette butt samples in a suitable solvent and treating the solution obtained with suitable anti-solvents.

Based on the results obtained in the solubility tests disclosed in the previous paragraph, acetone was selected as a solvent.

The anti-solvents tested were: water, cyclohexane and ethanol. The first two anti-solvents produced the most satisfactory results: in fact by adding a few drops of water (or cyclohexane) to the solution in acetone, the re-precipitation of cellulose acetate was immediately observed.

In any case the polymer precipitation was observed. However, a different effectiveness was observed in the precipitation with different solvents. In order of effectiveness; cyclohexane > water > ethanol. Therefore, after these preliminary tests, the subsequent tests were carried out with water and cyclohexane.

Once the cellulose acetate was precipitated from the mixture of acetone and water (or from the mixture of acetone and cyclohexane), the cellulose acetate was filtered and collected. The material obtained was dried for 24 hours to remove the residual solvent. The solid residue of cellulose acetate thus obtained was then used for characterization.

Furthermore the solid residue was weighted to calculate the yield of the separation process. The results obtained did not show significant differences between the two candidate anti-solvents (water and cyclohexane), as in both cases the yield is higher than 95%.

Example 2 - Identification of the separation method

The tests carried out have made it possible to identify the separation procedure. The butt is treated with acetone, which solubilizes the cellulose acetate together with nicotine; paper is not solubilized and is not removed by filtration. The suspension of cellulose acetate in acetone is later treated adding water, which makes CA no longer soluble; consequently, the cleaned CA is recovered by a new filtration passage. Nicotine remains solubilized in acetone also in the presence of water.

The separation procedure thus disclosed makes it possible to treat the butt obtaining an output with three distinct components: paper, cellulose acetate and nicotine.

If compared to several other available alternatives, the pair of solvents water/acetone was selected as it was considered particularly advantageous from two perspectives: both of them have very reduced costs and little if no adverse effects in terms of toxicity; furthermore, advantageously, the two compounds do not form azeotropes, and it is therefore possible to recycle acetone for several cycles.

Example 3 - Characterization of the components

Several tests were carried out for treating filters by dissolution and re-precipitation with suitable solvents in order to separate and recover cellulose acetate from the remainder of the butt. The treatment developed provides firstly using acetone, to dissolve cellulose acetate and separate it from paper, and subsequently adding water to induce precipitation of the polymer which can thus be easily recovered.

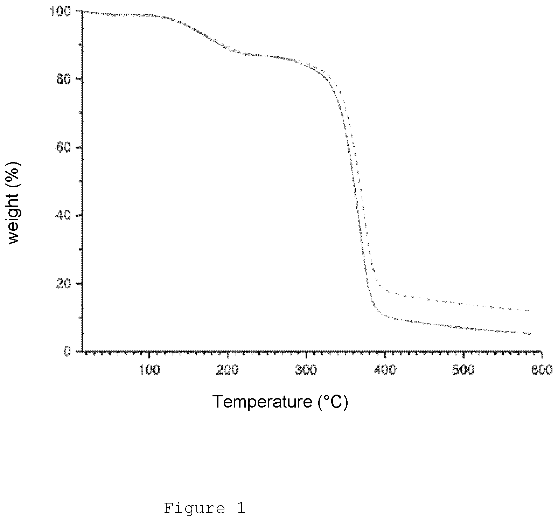

The precipitate obtained was characterized by FTIR and TG-DTA analysis to assess the effects of the treatment on the polymer. The FTIR analysis did not show significant differences if compared to the commercially available cellulose acetate samples as the two infra-red spectra are substantially superimposable. Similar results were obtained from the thermal analysis. In fact, as shown by thermograms reported in Figure 1, the thermal stability of the cellulose acetate is not significantly affected by the dissolution/precipitation treatments required for separating it from the remainder of the filter components.

The disclosed example made it possible to identify the procedure for separating cigarette butts. The tests obtained made it possible to verify the solubility of cellulose acetate in acetone, while the addition of small amounts of water or cyclohexane made it possible to verify the polymer precipitation (CA).

Using the relation between the cellulose acetate solubility and the content of anti-solvent in acetone, a process was thus developed for separating the components of the cigarette butts. The optimized process involves exclusively the use of water and acetone, and allows to separate paper, cellulose acetate and nicotine. The samples obtained were characterized by FTIR spectroscopy and thermal analysis. The results obtained confirm that the cellulose acetate recovered from cigarette filters does not have substantial difference if compared to the virgin raw material.

Consequently, the optimized process may be used to separate cigarette butts inside a pilot reactor, reducing costs and the environmental impact of this particular urban waste.

Example 4 - Pilot plant

A pilot plant for recovering material from used cigarette filters was designed on a lab scale.

Different possible plant solutions were envisaged and examined, all of them based on the solubilization of cellulose acetate (CA) with a solvent (e.g. acetone) and, downstream of the separation from impurities and pollutants, inducing precipitation thereof by adding another solvent (e.g. water).

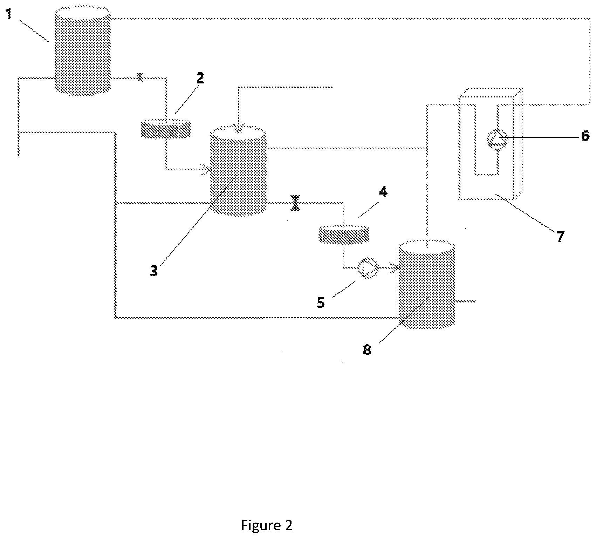

The plant diagram is disclosed in figure 2.

The separation process starts placing the used cigarette butts in a vessel containing acetone; the cellulose acetate is passed into the solution while the other solid components, in particular paper, ash and tobacco, remain undissolved.

To speed up paper separation and acetate solubilization, an immersed automatic stirrer or a ultrasound processor is preferably used; this last solution is particularly efficient in view of an enlargement of the plant on an industrial scale.

Once solubilization is complete, the spigot is opened and the content flows towards the tank placed slightly below to facilitate the passage through the filter where the suspended solids (paper, ash and tobacco) are retained and can therefore be removed.

The tank is supplied with water from the supply network in an amount sufficient to solubilize pollutants; then acetone is separated from water by means of a vacuum pump taking advantage of the different physical characteristics of the two compounds and in particular of the fact that, pressure being equal, the first one has a much lower boiling temperature. In case acetone vapours are too humid, they are dried by passing them into a specific vessel kept at a low temperature by coolants and then, once they are condensed, they are recirculated into the tank 1 to carry out a new treatment cycle. The evaporation of acetone is a transformation having highly negative enthalpy ($\Delta H<0$) and causes a reduction in the solution temperature; the tank will thus maintain its temperature making hot water circulate in the external jacket. As acetone evaporates the concentration of water in the solution increases and the cellulose acetate is precipitated.

The suspension flows through the filter retaining the precipitated cellulose acetate while water with the soluble polluting compounds is pumped by the pump into the collection tank where it can be collected in view of processes for recovering other components (e.g. nicotine) or discharged into the water treatment system.

In case pipes and tanks are to be made of metal, the equipment must be connected by a conductor wire to the earthing system.

Both tanks may be, with a simple plant modification, placed in a low position.

The pump may thereby be removed, however using a greater amount of water to precipitate cellulose acetate and increasing, consequently, the overall amounts of liquids (solvents and anti-solvents) to be used and possibly be disposed of.

The plant disclosed in the preceding paragraph may be made with the following components:

Vessel for cellulose acetate solubilization.

For this step a 2-litre jacketed glass container (reactor) is used and a flange having diameter 158 mm equipped with a lid and closure ferrule. The selected components (Colaver series 49DU9751; 49CR3603 and 49DU9751 or the like), made of Pyrex glass with a spherical bottom, are characterized by:

Capacity ml 2000,

flange diameter mm 158,

inner diameter of the body mm 120 (DN 120),

Duran flange with groove,

side hose connectors,

"Torion" drain valve,

4-Neck lid,

Duran type fixing ferrule with three steel segments with fixing screws.

To speed up the dissolution of cellulose acetate in the solvent and facilitate separation of the other components it is preferable to use a mechanical stirrer with shaft to be inserted through the lid holes of the reactor.

The process can further be optimised replacing the mechanical stirrer with an immersion ultrasound processor of the Hielscher UIP2000hd type - or the like.

The Hielscher UIP2000hd processor ensures a power efficiency higher than 90% (than the transducer) and is characterised by a frequency of 20kHz, automatic frequency adjustment system, maximum oscillation width of 25 microns adjustable between 50 and 100%; it can further be coupled to several types of flanges and sonotrodes.

The vessel for cellulose acetate precipitation is preferably a Pyrex glass jacketed reactor at all similar to the previous one but with slightly greater dimensions (Colaver series 49CR3303; 49CR3604 and 49DU9757 or similar) to contain, in addition to acetone from the reactor (1), also the water necessary for the precipitation of the plastic material to be recovered.

The vessel will be provided with a pressure measuring device to avoid that, once all the acetone has evaporated, the vacuum pump reduces too much the pressure taking also water to boil.

The filter 2 to remove paper, ash, tobacco and other non-soluble impurities and filter 4 to separate the precipitated plastic material and recover it will both consist of a polypropylene funnel type filter holder Buchner (Colaver code 34KL0441 or similar) and paper filtering material (Colaver code 29CE4103 or similar).

The filter has the following main characteristics:

Funnel material: polypropylene.

Capacity ml 390

Filter diameter mm 90

Holes mm 2.5

Filtering material: Whatman quantitative filter paper. Black ribbon filters diameter 90 mm.

For the flow rates concerned and considering the type of solvents used and the characteristic dimensions of the solid components being present, PVC pipes will be used with a 6mm DN inner diameter. In particular a transparent Colaver 62AG0609 pipe (or the like), non-toxic and cadmium free has been selected in a 10 m package having:

inner diameter mm 6

outer diameter mm 9

weight gr/mt 44

The plant will be completed by a series of spigots required to intercept the stream of material, allow for the passage of fluids when required and allow to create vacuum inside the reactors.

The four spigots fitted in the plant will be of the Rotaflo stopcock type, model GP6RA\7 (Colaver 53BB2607 or the like), with the following characteristics:

Hole mm 6

Fittings mm 7x10

Pyrex glass (to avoid lubricant operations)

Vacuum resistance until 0.01333 Pa ($10^{-4}$ Torr).

The circulation pump 5 must ensure a minimum prevalence to contrast load losses of the filter 4 and a possible quota difference given by the positioning of the final water collection tank. At this step of the process all the solid components were separated in the filter 2, the acetone solvent was evaporated in the tank 3 by means of the vacuum pump (it must be noted that acetone does not form azeotropic solutions with water) and the precipitated plastic material was removed by the filter 4; the liquid flowing through the pump is therefore water with soluble components (e.g. nicotine).

No particular requirements are needed for the pump and a Sicce Syncra Nano Wet&Dry 140 (or the like) is selected and characterised by the following parameters:

stream adjustable between 140 and 400 L/hour;

absorbed power: 2.6 W;

prevalence: 0.7 m;

dimensions: 6X4,6X4,4 cm.

In the plant the vacuum pump has a twofold function: the first one is to force the passage of acetone through the filter 2; the second one, after adding water, is to reduce pressure inside the tank 3 to make acetone evaporate, to separate it from water and recover it.

To make the lab scale plant it was selected a Buchi vacuum pump of the V-100 type (or the like) which has the following main characteristics:

Suction capacity (DIN 28432): 1.5 m3/h;

number of steps: 2;

vacuum level: 10 mbar ($\pm$ 2 mbar);

absorbed power: 170 W (240V, 60Hz);

pump motor: Brushless DC;

maximum speed 1280 rpm;

level of acoustic emissions (EN 61010-1): 32 - 57 dB(A)

dimensions: 180 x 275 x 210 mm;

weight: 5.6 kg;

protection degree: IP21.

The acetone separation process by evaporation is highly endothermic and, to avoid the reactor 3 from cooling excessively consequently freezing the water contained, it is necessary to provide heat making hot water circulate in the jacket. The temperature increase further facilitates acetone evaporation significantly reducing both the power consumption of the vacuum pump and the time required to complete the process.

Considering the pump characteristics and the fact that the technical sheet of the tool reports a suction capacity of 0.4167 litre/s, the thermal demand may be calculated as follows.

Considering the dimensions of the reactor 1 and the density of liquid acetone, each batch will have to process about 0.79kg of solvent.

The acetone used has the following characteristics:

Molar mass 58.08 (u)

Density 790 kg/m3

Boiling T 56.2 °C

Specific enthalpy ($\Delta$ebHO) 538.91 kJ/kg

Considering the specific enthalpy associated to the liquid/gas phase passage ($\Delta$ebH0 = 538.91 kJ/kg) the process will absorb about 425 kJ for each batch: a) Eev= 538.91*0.79=425.74 kJ

Acetone has the structural formula C3H6O and thus a molar mass of 58.08 u; it is possible to calculate the number of moles of a solvent in one litre of solvent at the liquid state (b) and, exploiting gas laws, the number of moles of acetone at the gas state in a cubic metre (c):

b)

$$Nmol = 790/58.08 = 13.435 \text{ mol/litre}$$

c) Nv = 44.643 mol/m3

It will be possible to obtain the volume that the vacuum pump will have to suck (d) and, considering the pump characteristic, the time required (e):

d)

$$V = 0.3009 \text{ m3}$$

e)

$$t = 18 \text{ min}$$

The pump will contribute with an energy (f)
f)

$$Ep = 150*0.7*60*18/1000 = 114 \text{ kJ}$$

Assuming for the sake of convenience that the whole energy absorbed by acetone is supplied by water, to maintain the vessel temperature constant it will be necessary to provide an amount of energy (g) which corresponds to an average power of (h) for the whole duration of the process.

g)

$$El = 13.435*31.3 = 425 \text{ kJ}$$

h)

$$P = El /(t*60) = 392 \text{ W}$$

Making available for the reactor jacket water at 40 °C and accepting a ΔT of 10°C between inlet and outlet, a flow rate of water (i) equal to 0.56 kg/min is obtained
i)

$$F = P/(\Delta T*4.18) = 0.563 \text{ kg/min}$$

Considering finally a pipe diameter of 4mm a water speed of 0.75 m/s is obtained that is compatible with the need to limit load losses.
j)

$$v = (F/1000)/(0.0042/4*3.14) = 0.75 \text{ m/s}$$

Those skilled in the art may bring modifications and changes to the embodiments and details of the invention if compared to what disclosed and shown for merely non-limiting exemplary purposes, without departing from the protection scope of the invention, as defined by the appended claims.

**Claims**

1. Process for the degradation of cigarette butts, wherein the cigarette butt is composed by paper, ash residues and tobacco residues, cellulose acetate (CA), nicotine and tar, to recover pure cellulose acetate (CA) comprising the following steps

 a) soaking cigarette butts in a solution of at least one polar aprotic solvent having dielectric constant higher then 10 for a time sufficient to obtain the complete dissolution of cellulose acetate (CA) and nicotine, to obtain a precipitate of paper, ash residues and tobacco residues and a solution of cellulose acetate (CA) nicotine and tar;
 b) removal of the precipitate of paper, ash residues and tobacco residues as obtained in step a) by filtration;
 c) drying the precipitate as removed in step b) to remove the residual solvent;
 d) adding a polar protic anti-solvent to the solution of cellulose acetate (CA) nicotine and tar as obtained in step a) to obtain a precipitate of pure cellulose acetate (CA) as final product together with a liquid residue made of polar aprotic solvent, polar protic anti-solvent, nicotine and tar;
 e) filtration of the precipitate of pure cellulose acetate (CA) as obtained in step d) to separate from the liquid residue of polar aprotic solvent, polar protic anti-solvent, nicotine and tar;
 f) distillation of the liquid residue of polar aprotic solvent, polar protic anti-solvent, nicotine and tar as obtained in step e) to obtain a of polar aprotic solvent reusable in a further cycle, as further final product, and a waste residue made of nicotine and tar concentrate in polar protic anti-solvent
 wherein the aprotic polar solvent is acetone.

2. Process according to claim 1 wherein the anti-solvent is selected from the group consisting of water, cyclohexane and ethanol.

3. Process according to claim 1 wherein in step f) the solvent undergoes to evaporation under vacuum.

**Patentansprüche**

1. Verfahren zum Behandeln von Zigarettenstummeln, wobei der Zigarettenstummel aus Papier, Ascherückständen und Tabakrückständen, Celluloseacetat (CA), Nikotin und Teer besteht, um reines Celluloseacetat (CA) zurückzugewinnen, umfassend die folgenden Schritte

 a) Eintauchen der Zigarettenstummel in einer Lösung aus mindestens einem polar aprotischen Lösungsmittel aufweisend eine Dielektrizitätskonstante von mehr als 10 für eine ausreichende Zeit, um die vollständige Lösung von Celluloseacetat (CA) und Nikotin zu erreichen, um ein Präzipitat aus Papier, Ascherückständen und Tabakrückständen sowie eine Lösung aus Celluloseacetat (CA), Nikotin und Teer zu erhalten,
 b) Entfernen des in Schritt a) erhaltenen Präzipitats aus Papier, Ascherückständen und Tabakrückständen durch Filtration;
 c) Trocknen des in Schritt b) entfernten Präzipitats, um das restliche Lösungsmittel zu entfernen;
 d) Hinzufügen eines polar protischen Antilösungsmittels zu der in Schritt a) erhaltenen Lösung aus Celluloseacetat (CA), Nikotin und Teer, um ein Präzipitat aus reinem Celluloseacetat (CA) als Endprodukt zu erhalten, zusammen mit einem flüssigen Rückstand, der aus polar aprotischem Lösungsmittel, polar protischem Antilösungsmittel, Nikotin und Teer besteht,
 e) Filtrieren des in Schritt d) erhaltenen Präzipitats aus reinem Celluloseacetat (CA), um es von dem flüssigen Rückstand aus polar aprotischem Lösungsmittel, polar protischem Antilösungsmittel, Nikotin und Teer zu trennen;
 f) Destillieren des in Schritt e) erhaltenen flüssigen Rückstands aus polar aprotischem Lösungsmittel, polar protischem Antilösungsmittel, Nikotin und Teer, um ein wiederverwendbares polar aprotisches Lösungsmittel für einen weiteren Zyklus als weiteres Endprodukt zu erhalten, sowie ein Abfallrückstand bestehend aus Nikotin und Teerkonzentrat in polar protischem Antilösungsmittel

 wobei das polar aprotische Lösungsmittel Aceton ist.

2. Verfahren nach Anspruch 1, wobei das Antilösungsmittel aus der Gruppe, die aus Wasser, Cyclohexan und Ethanol besteht, ausgewählt wird.

3. Verfahren nach Anspruch 1, wobei das Lösungsmittel in Schritt f) einer Vakuumverdampfung untergezogen wird.

**Revendications**

1. Procédé de traitement des mégots de cigarettes, dans lequel le mégot de cigarette est composé de papier, résidus de cendres et de tabac, acétate de cellulose (CA), nicotine et goudron, pour récupérer de l'acétate de cellulose (CA) pur, comprenant les étapes suivantes

   a) tremper les mégots de cigarettes dans une solution d'au moins un solvant aprotique polaire ayant une constante diélectrique supérieure à 10 pendant un temps suffisant pour obtenir la dissolution complète de l'acétate de cellulose (CA) et de la nicotine, afin d'obtenir un précipité de papier, de résidus de cendres et de résidus de tabac, et une solution d'acétate de cellulose (CA), de nicotine et de goudron;
   b) enlever le précipité de papier, résidus de cendres et résidus de tabac obtenu à l'étape a) par filtration;
   c) sécher le précipité enlevé à l'étape b) pour éliminer le solvant résiduel;
   d) ajouter un anti-solvant protique polaire à la solution d'acétate de cellulose (CA), de nicotine et de goudron obtenue à l'étape a) pour obtenir un précipité d'acétate de cellulose (CA) pur comme produit final, ainsi qu'un résidu liquide composé de solvant aprotique polaire, d'anti-solvant protique polaire, de nicotine et de goudron;
   e) filtrer le précipité d'acétate de cellulose (CA) pur obtenu à l'étape d) pour le séparer du résidu liquide de solvant aprotique polaire, d'anti-solvant protique polaire, de nicotine et de goudron;
   f) distiller le résidu liquide de solvant aprotique polaire, d'anti-solvant protique polaire, de nicotine et de goudron obtenu à l'étape e) afin d'obtenir un solvant aprotique polaire réutilisable pour un cycle ultérieur, en tant que produit final supplémentaire, et un résidu de déchets composé de nicotine et de goudron concentrés dans l'anti-solvant protique polaire

   dans lequel le solvant aprotique polaire est l'acétone.

2. Procédé selon la revendication 1, dans lequel l'anti-solvant est choisi parmi le groupe constitué par l'eau, le cyclohexane et l'éthanol.

3. Procédé selon la revendication 1, dans lequel à l'étape f), le solvant subit une évaporation sous vide.

Figure 1

Figure 2

## REFERENCES CITED IN THE DESCRIPTION

### Patent documents cited in the description

- US 4457317 A
- US 5328934 A
- US 5504119 A
- US 5504120 A
- EP 2520184 A
- WO 2007035749 A2
- US 20140287144 A
- WO 2007035749 A
- CN 106928486
- US 2014326421 A

### Non-patent literature cited in the description

- Developments in nonmagnetic physical separation technologies for hematitic/goethitic iron ore. **MARÉ E ; BEVEN B ; CRISTAFIO C.** Iron Ore: Mineralogy, Processing and Environmental Sustainability. Elsevier, 2015
- **D'HENI TEIXEIRA MB ; DUARTE MAB ; RAPOSO GARCEZ L ; CAMARGO RUBIM J ; HOFMANN GATTI T ; ZIANI SUAREZ PA.** Process development for cigarette butts recycling into cellulose pulp. *Waste Management,* 2017, vol. 60, 140-150
- **BENAVENTE MJ ; ARÉVALO CABALLERO MJ ; SILVERO G ; LÓPEZ-COCA I ; VALENTIN GÓMEZ ESCOBAR V.** Cellulose Acetate Recovery from Cigarette Butts. *MDPI Proceedings,* 2018, vol. 2, 1447
- **MARIA J. BENAVENTE et al.** Cellulose Acetate Recovery from Cigarette Butts. *Proceedings,* 25 February 2019, vol. 2, 1447
- **MARIA J. BENAVENTE ; MARIA J. ARÉVALO CABALLERO ; GUADALUPE SILVERO ; IGNACIO LÓPEZ-COCA ; VALENTIN GÓMEZ ESCOBAR.** Cellulose Acetate Recovery from Cigarette Butts. *Proceedings,* 2018, vol. 2, 1447